(19) Europäisches Patentamt
European Patent Office
Office européen des brevets

(11) **EP 3 696 689 A1**

(12) **EUROPEAN PATENT APPLICATION**

(43) Date of publication:
**19.08.2020  Bulletin 2020/34**

(51) Int Cl.:
***G06F 16/23*** *(2019.01)*

(21) Application number: **19157713.9**

(22) Date of filing: **18.02.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Advanced Digital Broadcast S.A.**
**1293 Bellevue (CH)**

(72) Inventor: **Powchowicz, Tomasz**
**65-119 Zielona Gora (PL)**

(74) Representative: **Blonski, Pawel**
**Advanced Digital Broadcast Polska**
**Trasa Polnocna 16**
**65-119 Zielona Gora (PL)**

(54) **SYSTEM AND METHOD FOR DELIVERING VIEW-RELATED NOTIFICATIONS IN A COMPUTER DATABASE**

(57)    A method for delivering notifications in a computer database (112) having defined at least one view (114) configured to keep a copy of a portion of said database (112) data outside of the database (112), the method comprising the step of: executing an update of the database (112); in response to the update, refreshing data in said at least one view (114); the method being characterized in that it comprises the steps of: generating, by said database (112), at least one notification, corresponding to the update, to a Notification Distributor module (113); keeping in said Notification Distributor module (113) a changes log (200); upon each notification merging the notification and its corresponding scope with any preceding notifications destined for the same view (114); when a distribution condition has been met, providing a merged notification to the associated view (114) and skipping said notification distribution otherwise.

Fig. 1

**Description**

**TECHNICAL FIELD**

The present invention relates to a system and method for delivering notifications in a computer database. In particular, optimizations are defined for a system comprising of a set of database updaters, an SQL database and a set of views (a view in this meaning may be any entity that keeps respective data outside of the source database - it is not necessarily the VIEW as per SQL definition) tracing the state of the SQL database. The optimization is effected by reducing a number of change notifications, as well as the scope of the respective updates, sent from an SQL database to said views for tracking whether a particular view shall be updated or not. The number of time-consuming database operations related to fetching content is reduced.

**BACKGROUND OF THE INVENTION**

Typical databases are organized such that Database Updaters (it may be any source of updates such as updates triggered by a user and passed via a corresponding application) insert data into a database. A view (e.g. in SQL, a view is a virtual table based on the result-set of an SQL statement) listens for such changes and updates its internal state by calling SELECT methods. An update command generated by a Database Updater may add, remove or modify a set of rows in the database. For each changed row, a database change notification is generated. If such notifications are distributed to a plurality of views (e.g. more than 100) the following problems occur:

I) A copy of data is distributed to each view and stored in an internal notifications queue of the view. A view can raise exceptions due to lack of memory (data are not shares between queues) and due to fragmented memory (when the data are shared between queues). The fragmentation of memory is caused explicitly or implicitly in different cases:

a) Standard library data structures (such as: std::vector (C++) or java.utils.ArrayList (Java)) that operate on continuous memory do not release memory to the system, when elements are removed from a list, but allocate memory when new elements are added. Even if the standard containers are wrapped with a mechanism of releasing memory to the system it does not mean that the memory will be released due to fragmentation and a fact that a memory allocator may keep already allocated pages for future uses. It raises a question about how to minimize a peak allocation of memory;

b) An MMU (Memory Management Unit) uses memory pages, thus a small allocation, for example required for a low priority view, may block a whole page. A view can be blocked for a longer period of time. During that time the system must process existing tasks further and release memory for a view due to memory constraints;

c) A process of refreshing a view is usually more time-consuming when compared to a duration of inserting new data into the database. As a result, a set of notifications is not handled and stays in memory until it may be processed;

II) Every view is refreshed with the same rate (there is not present any prioritization). Therefore it may happen that the views with a low priority refresh rate (background view from a user's perspective, not database perspective) are refreshed instead of views with a high priority refresh rate (e.g. a view presented to end-user). System responsiveness is relatively low, at the time of updates, because the views are updated immediately.

III) Views can be updated with out-of-date data due to high latency in notifications distribution. It could happen when a view is notified too often, and it is mainly occupied with updating its state instead of tracking the changes;

IV) Views can be updated too often, causing to stall responsiveness to user's interactions. The problem could be mitigated by introducing hysteresis, but it will increase the overall latency (since an update request sent to a database till a view refreshing its content).

It would be advantageous to address the aforementioned disadvantages and implement notifications delivery that would not decrease responsiveness of the system and not lead to bottlenecks.
The aim of the development of the present invention is an improved system and method for delivering notifications in a computer database.

## SUMMARY AND OBJECTS OF THE PRESENT INVENTION

An object of the present invention is a method for delivering notifications in a computer database having defined at least one view configured to keep a copy of a portion of said database data outside of the database, the method comprising the step of: executing an update of the database; in response to the update, refreshing data in said at least one view; the method being characterized in that it comprises the steps of: generating, by said database, at least one notification, corresponding to the update, to a Notification Distributor module; keeping in said Notification Distributor module a changes log; upon each notification merging the notification and its corresponding scope with any preceding notifications destined for the same view; when a distribution condition has been met, providing a merged notification to the associated view and skipping said notification distribution otherwise.

Preferably, said a distribution condition is a time elapsed from a previous distribution of a notification to the same view.

Preferably, said changes log is configured to associate or merge database change notifications into revision entries whereas the Log has its head and tail pointer and every view has its pointer to the Log, denoting a consumption of notifications.

Preferably, each revision entry has a priority assigned.

Preferably, said computer database is an SQL-type database.

Preferably, in case of merging change notifications having an assigned type selected from a group comprising: ADDED, UPDATED, REMOVED type, in case the same change type is present in the merged notifications, retaining the type and merging the data changes whereas in case different change types are present in the merged notifications, handling the notification types in the following manner:

$$REMOVED + ADDED = UPDATED;$$

$$UPDATED\ or\ ADDED + REMOVED = REMOVED;$$

$$ADDED + UPDATED = ADDED.$$

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

## BRIEF DESCRIPTION OF THE DRAWINGS

These and other objects of the invention presented herein, are accomplished by providing a system and method for delivering notifications in a computer database. Further details and features of the present invention, its nature and various advantages will become more apparent from the following detailed description of the preferred embodiments shown in a drawing, in which:

Fig. 1 presents a diagram of an exemplary receiver implementing a method according to the present invention;

Fig. 2 depicts a Log data structure according to the present invention;

Fig. 3 illustrates a flow of information from the Database Updater to the View;

Fig. 4 presents a method for processing database changes;

Fig. 5 illustrates a method of dispatching a revision change from the Notification Distributor to the View; and

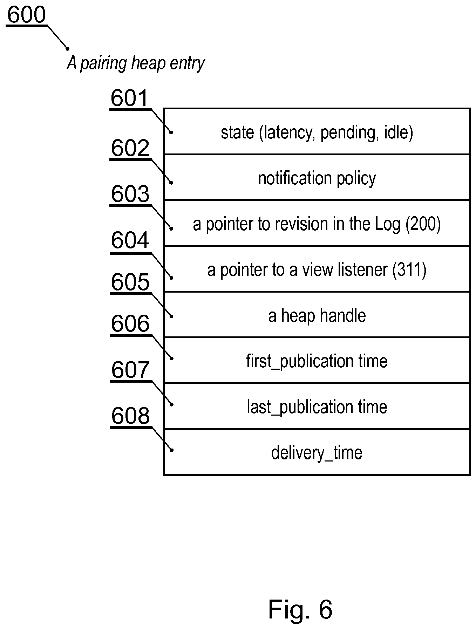

Fig. 6 presents a pairing heap entry.

**NOTATION AND NOMENCLATURE**

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

**DESCRIPTION OF EMBODIMENTS**

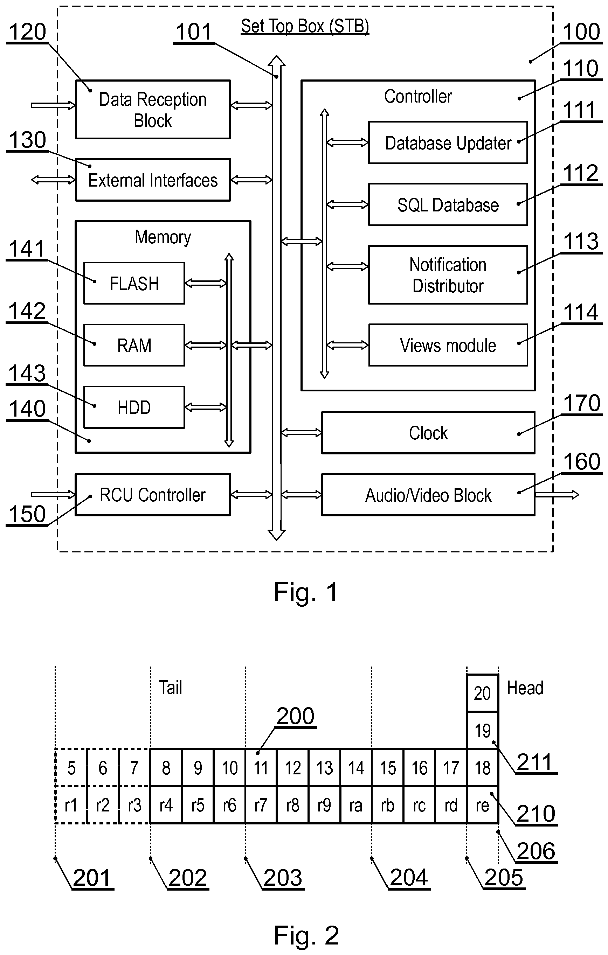

The present invention introduces a Notification Distributor (113) between the SQL database (112) and its View (114) as shown in Fig. 1. The number of notifications, generated by an SQL database (112), is decreased due to compacting, in a Log (210, 211), and a technique of a single delivery (332 → 340, 335 → no delivery). Such a combination allows combining benefits from both techniques such as event-driven programming and polling.

The event-driven technique generates events also when the given View cannot respond to them (a queuing effect), whereas polling asks about content when there is not any content available. Connecting both techniques merges benefits of both and reduces disadvantages.

Moreover, the invention introduces a method of managing notifications into groups (revisions), that reduce fragmentation of memory and reduce a peak memory usage (data are stored only one for many views, and stored in continuous memory).

Fig. 1 presents a diagram of an exemplary receiver (set-top box (STB)) implementing the method according to the present invention. To the left size of the bus (101) (may be any suitable data bus such as I2C) there are connected STB (100) components such as Data Reception Block (120) (audio/video and or supplementary data), External Interfaces (130) (such as USB or Bluetooth), different kinds of memory (141, 142, 143), an RCU Controller (150), Audio/Video Block (160) configured to process the received data and generate an output signal, a Clock (170).

Other, common STB components may also be present such as an Ethernet port of Wi-Fi module.

The Memory (141, 142, 143) may store computer program or programs executed by a Controller (110) in order to execute steps of the method according to the present invention.

To the right side of the bus (101) there is connected the Controller (110) and its subcomponents:

- a Database Updater (111) configured to receive requests for database updates and provide the updates to the database (any database client may act as a Database Updater; alternatively a separate, aggregating Database Updater may be present);

- an SQL Database (112) being a typical system allowing to create SQL Views (nevertheless a concept of a view may be defined similarly in a non-SQL database);

- a Notification Distributor (113) configured to act as a man-in-the-middle between the database(112) and a Views Module (114); and

- and the Views Module (114) configured to manage one or more views relating to the SQL Database (112).

Fig. 2 depicts a data structure, called the Log (200), according to the present invention. The Log (200) associates or merges database change notifications (211) into revision entries (210). The Log has its head (206) and tail pointer (202). Every view has its pointer (e.g. 201, 202, 203, 204, 205, 206) to the Log, denoting a consumption of notifications. The view's pointers are moved only in the head direction, and in most cases are moved to the head position (206).

Optionally, pointers outside the Log (behind the tail) may be treated as massive changes (it may happen that update delta may not be generated or its generation is inefficient, in such cases the complete view may be refreshed, which is considered a massive change).

Every position is the log (200) has its own identifier, which is called in this invention a revision (210) (e.g. r1,r2,..., rd, re in Fig. 2). A new revision identifier is always increased by one to the previous one.

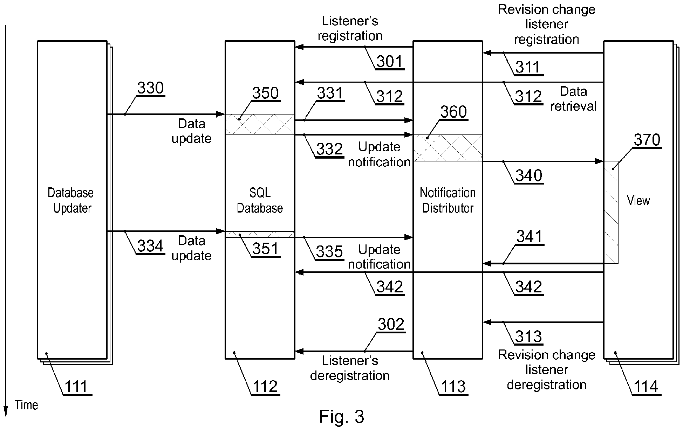

Fig. 3 illustrates a flow of information from the Database Updater (111) to a View (114).

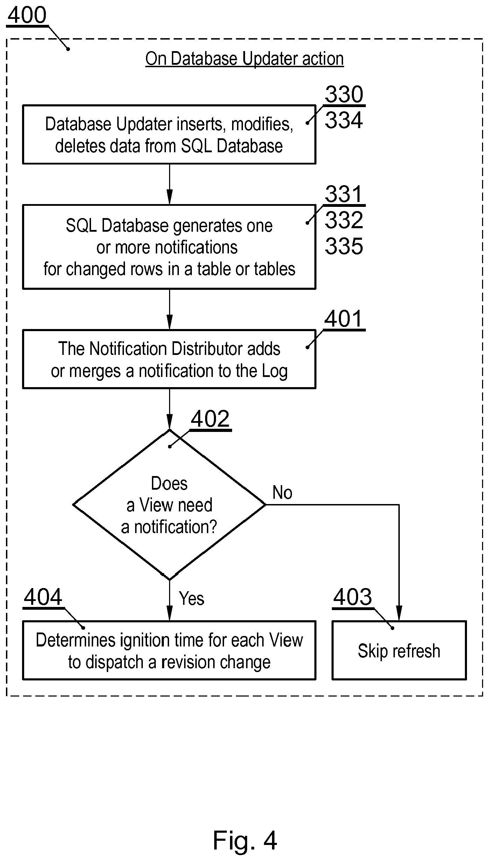

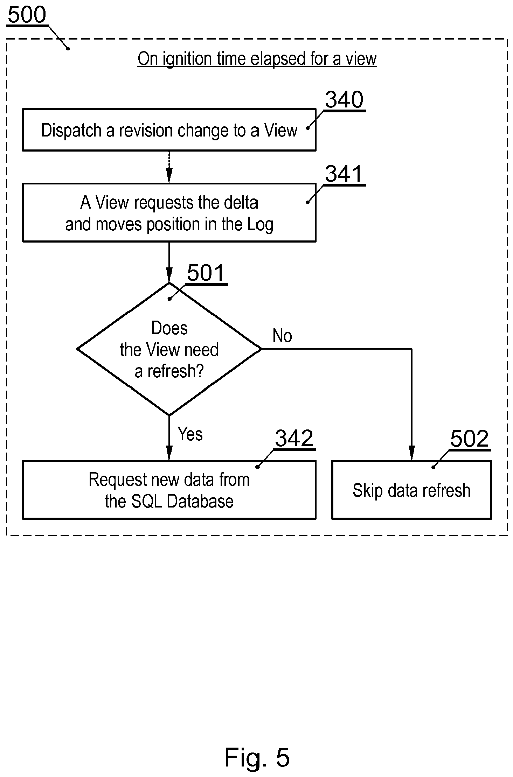

The figure depicts two main flows when an SQL database is changed (illustrated in Fig. 4) and when a revision is changed (presented in Fig. 5). It also shows operations executed during a start-up (301 registration of a database change listener to SQL database) and shutdown (302 deregistration of the database change listener).

An initial state of a view is also depicted as (311 - registration of a revision change listener; 312 - a request for database update (calling a SELECT method in the SQL language); 313 - deregistration of a revision change listener).

After a start-up of the SQL Database (112), a Notification Distributor (113) registers a listener (301) for database change notifications. The listener is kept until the database's shutdown (302 - the listener is deregistered).

When a View (114) is created, it registers its listener (311) to Notification Distributor (113). After registration, the Notification Distributor (113) returns a revision status (comprises a position in the Log e.g. (205)). The View (114) stores the revision status and uses it later (341) for retrieving a delta (a list of changes) between revisions.

After registration (311), the content of the view (114) is updated (312) by calling for example a "SELECT" method to the database (112) and receiving data.

The View (114) selects refresh policy during registration. Refresh policies may be related to a minimum or maximum latency or both or to specific policy such updating certain data set only after a predefined time threshold expiration.

The Database Updater (111) requests adding, removing or modification of data in a table (330) by calling SQL commands such as INSERT, DELETE, UPDATE or others. After processing (350) the update request (330), the SQL Database (112) generates a set of notifications (331, 332) to the Notification Distributor (113).

The notifications (331, 332) are published in the Log (200); added or merged to it depending on the state of the last revision. The last revision is open for merges when no view depends on it. The last revision is closed and can not merge new changes when a view is synchronized to it. The notifications (331, 332, 335) (positions 18, 19, 20 in Fig. 2) are merged into one entry in the Log (210).

The Notification Distributor (113) notifies (340) a given view that an update is available. Further, a view may determine the view is aware of its out-of-date state (370) and refresh (341) data. Newest view data are retrieved at (342). The view refresh request has two aims: (1) synchronization of a revision status to a current Log position (per view); and (2) determining a change delta (the Notification Distributor (113) computes the delta between two Log positions' data), based on which a given view is aware whether it shall refresh (a change of data has occurred).

The time between receiving an update notification (332) and its dispatching (360) depends on view refresh policy (as described in details below).

Fig. 4 presents a method for processing database changes such as adding, deleting, modifying (330, 334) database entries requested by the Database Updater (111). The SQL Database (112) after processing the requests (330, 334) generates a set of notifications (331, 332, 335) describing changes in the database.

The changes are registered (401) by the Notification Distributor (113) in the Log (200). A view should not be notified (403), if it has been previously notified (402), until said view moves a position in the Log (200). According to a data refresh policy requested by a view (311), the trigger time for dispatching a revision change notification is calculated (404), and a count-down process is started or updated if already started.

Fig. 5 illustrates a method of dispatching a revision change from the Notification Distributor (113) to the View (114). When the trigger time, scheduled in the previous stage (400) has elapsed (404), the revision change is dispatched to an associated view.

When a view is ready (341) to process the revision change, it requests the delta between revisions (e.g. 204-206). After generation of said delta in the Log (200), and moving the Log to the requested revision, a view checks if a set of changes will alter its contents (501). If it does not affect its content, the further processing is stopped (502). Otherwise, new data is requested from the SQL database (e.g. by a SELECT operation).

Embedded systems typically have strict memory and CPU (Central Processing Unit) constraints. If due to memory constraints or use-cases (e.g. a lack of indexes in a database), an operation of view refresh is time-consuming, a pointer to the Log (202) can be moved outside Log's tail (202). The tail could be limited to a number of revisions or a total memory used by the revisions. When a pointer to the Log (200) is outside of the tail (202) and a view asks for a delta, the Notification Distributor (113) returns a massive change message. It means that a view cannot be updated in the incremental mode. Update in the incremental mode is based on the delta between specific revisions and it determines if a refresh of a view is needed. The tail in the Log (200) can be moved during publish operation or processing delta between revisions. The head (206) is moved only after adding a new entry to the Log (200).

After adding or merging a notification (401) to the Log (200), the Notification Distributor (113) checks (402) if a view needs a revision change notification. If the revision change notification has already been sent to the view (335), the process does not need to be repeated (403) because the view is aware of its out-of-date state (370) and it will refresh its content in the near future. The view's update trigger time is determined for a revision change notification (404).

The database change notifications can be merged (e.g. relating to the same table, column, row, or to the same virtual container (a foreign key)).

For example three typical change notifications may be merged: ADDED, UPDATED, REMOVED (each may comprise names of changed columns). In case the same change type is present in the merged notifications, the type is retained and the data changes are merged.

Other change notification states are handled in the following manner:

$$REMOVED + ADDED = UPDATED;$$

$$UPDATED/ADDED + REMOVED = REMOVED;$$

$$ADDED + UPDATED = ADDED.$$

In case of update, a column affected by the change is relevant. The changed columns may be identified with their respective identifiers.

The notifications are stored and sorted in a contiguous memory (a flat map). A binary search may be used for finding or inserting an entry. Keeping changes in a continuous container is crucial to reduce fragmentation of memory and the peak memory usage. The solution based on heap allocation of small objects (e.g. maps) creates too much fragmentation and increases the peak memory usage.

The Notification Distributor (113) keeps revision statuses on a pairing heap (600). The revision status comprise of its state (601) (latency, pending, idle), notification policy (602), a pointer to the revision (603) in the Log (200), a pointer (604) to a view listener (311), a heap handle (605) - for updating a revision status on a paring heap, a set of timestamps:

- first_publication (606) - informing when the first publish was called;

- last_publication (607) - the last publish was called;

- delivery_time (608) - the log was synchronized (a delta between revisions was requested).

An order of pairing heap is organized according the following rules: On the top of the pairing heap are located revision statuses in a latency state (360). After them, in a pending state (370), and the rest of revision statuses are in an idle state (waiting for database change notification). In a latency state, a notification is waiting be send; in pending state, the Notification Distributor waits for delta synchronization; in idle state, it waits for a new notification for a view.

If revisions' states are equal, the priority is taken into account. A revision change notification for a view can be processed according to one of the following, exemplary priorities:

- FOREGROUND_INSTANT - for instant propagation,

- FOREGROUND_FOCUS - for focused views on a GUI,

- FOREGROUND_PRESENT - for views presented in the background of the GUI,

- BACKGROUND_PREFETCH - for views presented in the near future,

- BACKGROUND_IDLE - for views operated in the background,

- PERIODIC_UPDATE - for example data that shall be updated every minute,

- BACKGROUND_SUSPEND - for views where updates are suspended.

If the priorities are equal, the trigger time is taken into account. The trigger time is sorted in ascending order, therefore the revisions that are processed first are the revisions having the oldest trigger times.

When the ignition time for sending revision change notification elapses (332 → 360), the notification is dispatched to a view (340). After receiving the revision change notification, a view asks about the change delta between the last synchronization and the present notification. After analyzing the delta of changes, a view decides if it needs a refresh (501). If it needs refreshing, a request for new data is sent to the SQL database (342); otherwise, the refresh action is skipped (502).

It is worth noting that a view requests and downloads data itself, when it is ready. A notification may be received by said view but ultimately the view decides on exact refresh time according to its state.

The main advantage of the invention is the reduction CPU power needed to refresh and keep up-to-date views. A SELECT operation to an SQL database is time-consuming, especially when indexes are not generated to speed-up building an SQL response. Taking into account limited CPU power of typical embedded systems, only one or a few views can be updated at the same time. During time-consuming updates, some of the views may be updated and the invention provides a method for reacting to the latest changes and it is immune to a queuing effect (information is stalled on queues consuming memory and CPU power to process it).

The second advantage is the reduction of latency because a high priority view is handled before a low priority view. The latency is lower also because not needed refreshes are eliminated by reducing the number of notification from an SQL database to a view. The latency also is decreased by the fact, that a view pulls the actual delta of revision when it's ready to process it. This benefit leads to the higher responsiveness of the whole system.

The third advantage is the reduction of fragmentation and the peak memory usage by organizing database changes in continuous memory and combining a set of small changes into a compact one.

Therefore, the invention provides a useful, concrete and tangible result.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for delivering notifications in a computer database may be performed and/ or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. A method for delivering notifications in a computer database (112) having defined at least one view (114) configured to keep a copy of a portion of said database (112) data outside of the database (112), the method comprising the step of:

   • executing an update of the database (112);
   • in response to the update, refreshing data in said at least one view (114);

   the method being **characterized in that** it comprises the steps of:

   • generating, by said database (112), at least one notification, corresponding to the update, to a Notification Distributor module (113);
   • keeping in said Notification Distributor module (113) a changes log (200);

• upon each notification merging the notification and its corresponding scope with any preceding notifications destined for the same view (114);

• when a distribution condition has been met, providing a merged notification to the associated view (114) and skipping said notification distribution otherwise.

2. The method according to claim 1 wherein said a distribution condition is a time elapsed from a previous distribution of a notification to the same view (114).

3. The method according to claim 1 wherein said changes log (200) is configured to associate or merge database change notifications (211) into revision entries (210) whereas the Log has its head (206) and tail pointer (202) and every view has its pointer (201, 202, 203, 204, 205, 206) to the Log (200), denoting a consumption of notifications.

4. The method according to claim 1 wherein each revision entry has a priority assigned.

5. The method according to claim 1 wherein said computer database (112) is an SQL-type database.

6. The method according to claim 2 wherein in case of merging change notifications having an assigned type selected from a group comprising: ADDED, UPDATED, REMOVED type, in case the same change type is present in the merged notifications, retaining the type and merging the data changes whereas in case different change types are present in the merged notifications, handling the notification types in the following manner:

$$REMOVED + ADDED = UPDATED;$$

$$UPDATED \text{ or } ADDED + REMOVED = REMOVED;$$

$$ADDED + UPDATED = ADDED.$$

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

## Set Top Box (STB)

120    101    100

110

Data Reception Block

Controller

111

Database Updater

130

External Interfaces

112

SQL Database

Memory

113

Notification Distributor

141

FLASH

142

RAM

114

Views module

143

HDD

140

Clock   170

RCU Controller

Audio/Video Block   160

150

**Fig. 1**

Tail

Head

20

200

19

| 5 | 6 | 7 | 8 | 9 | 10 | 11 | 12 | 13 | 14 | 15 | 16 | 17 | 18 |
|---|---|---|---|---|----|----|----|----|----|----|----|----|----|
| r1 | r2 | r3 | r4 | r5 | r6 | r7 | r8 | r9 | ra | rb | rc | rd | re |

211

210

206

201    202    203    204    205

**Fig. 2**

Fig. 3

<u>400</u>

---

On Database Updater action

<u>330</u>
<u>334</u>

Database Updater inserts, modifies, deletes data from SQL Database

↓

<u>331</u>
332
335

SQL Database generates one or more notifications for changed rows in a table or tables

↓

<u>401</u>

The Notification Distributor adds or merges a notification to the Log

↓

<u>402</u>

Does a View need a notification?

No →

<u>404</u>                    Yes ↓                    <u>403</u>

Determines ignition time for each View to dispatch a revision change

Skip refresh

---

Fig. 4

500

On ignition time elapsed for a view

340

Dispatch a revision change to a View

341

A View requests the delta
and moves position in the Log

501

Does
the View need
a refresh?

No

Yes

342

Request new data from
the SQL Database

502

Skip data refresh

Fig. 5

<u>600</u>

*A pairing heap entry*

<u>601</u>

<u>602</u>

<u>603</u>

<u>604</u>

<u>605</u>

<u>606</u>

<u>607</u>

<u>608</u>

| |
|---|
| state (latency, pending, idle) |
| notification policy |
| a pointer to revision in the Log (200) |
| a pointer to a view listener (311) |
| a heap handle |
| first_publication time |
| last_publication time |
| delivery_time |

Fig. 6

Europäisches
Patentamt

European
Patent Office

Office européen
des brevets

# EUROPEAN SEARCH REPORT

Application Number

EP 19 15 7713

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 10 198 469 B1 (WRIGHT CHARLES [US] ET AL) 5 February 2019 (2019-02-05) | 1-5,7,8 | INV. G06F16/23 |
| Y | * column 1, line 28 - column 2, line 8 * * column 8, line 63 - column 9, line 6 * * column 10, line 52 - line 65 * * column 12, line 25 - line 50; figure 9 * * column 13, line 28 - line 61 * ----- | 6 | |
| Y | US 2005/235001 A1 (PELEG NITZAN [IL] ET AL) 20 October 2005 (2005-10-20) | 6 | |
| A | * abstract * * paragraphs [0003], [0022], [0024], [0026] - [0027], [0032] - [0034]; figure 5 * ----- | 1-5,7,8 | |
| A | US 2004/193653 A1 (HOWARD ROBERT M [US] ET AL) 30 September 2004 (2004-09-30) * the whole document * ----- | 1-8 | |

**TECHNICAL FIELDS SEARCHED (IPC)**

G06F

The present search report has been drawn up for all claims

| Place of search | Date of completion of the search | Examiner |
|---|---|---|
| The Hague | 22 May 2019 | Fournier, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 15 7713

This annex lists the patent family members relating to the patent documents cited in  the above-mentioned European search report.
The members are as contained in the European Patent Office EDP file on
The European Patent Office is in no way liable for these particulars which are merely given for the purpose of information.

22-05-2019

| Patent document cited in search report | | Publication date | Patent family member(s) | | Publication date |
|---|---|---|---|---|---|
| US 10198469 | B1 | 05-02-2019 | US | 10002154 B1 | 19-06-2018 |
| | | | US | 10198469 B1 | 05-02-2019 |
| | | | US | 10241965 B1 | 26-03-2019 |
| | | | US | 2019065543 A1 | 28-02-2019 |
| | | | US | 2019108167 A1 | 11-04-2019 |
| US 2005235001 | A1 | 20-10-2005 | NONE | | |
| US 2004193653 | A1 | 30-09-2004 | NONE | | |

EPO FORM P0459

For more details about this annex : see Official Journal of the European Patent Office, No. 12/82